# EUROPÄISCHE PATENTSCHRIFT

(11) **EP 2 673 130 B1**
(45) Veröffentlichungstag und Bekanntmachung des Hinweises auf die Patenterteilung: **28.03.2018**
(21) Anmeldenummer: 12704048.3
(22) Anmeldetag: 09.02.2012
(51) Int. Cl.: B29C 65/08, B65B 51/22, B65B 51/30

(54) **VERFAHREN ZUR HERSTELLUNG EINER QUERSIEGELNAHT SOWIE QUERSIEGELVORRICHTUNG**
METHOD FOR PRODUCING A TRANSVERSE SEALING SEAM AND TRANSVERSE SEALING DEVICE
PROCÉDÉ PERMETTANT DE PRODUIRE UN JOINT SOUDÉ TRANSVERSAL ET DISPOSITIF DE SOUDAGE TRANSVERSAL

(30) Priorität: 11.02.2011 DE 102011004002
(43) Veröffentlichungstag der Anmeldung: 18.12.2013
(73) Patentinhaber: Herrmann Ultraschalltechnik GmbH & Co. KG, 76307 Karlsbad (DE)
(72) Erfinder: HERRMANN, Thomas, 76135 Karlsruhe (DE); BOBSCHEK-BORN, Franz, 76149 Karlsruhe (DE)
(74) Vertreter: WSL Patentanwälte Partnerschaft mbB
(86) Internationale Anmeldenummer: PCT/EP2012/052217
(87) Internationale Veröffentlichungsnummer: WO 2012/107522

(56) Entgegenhaltungen:
- EP-A1- 1 468 914
- EP-A2- 1 354 693
- WO-A1-2011/104168
- DE-A1-102007 022 854
- DE-A1-102007 060 442
- FR-A1- 2 953 200

## Beschreibung

Die vorliegende Erfindung betrifft ein Verfahren zur Herstellung einer Quersiegelnaht sowie eine Quersiegelvorrichtung mittels Ultraschall.

Beim Quersiegeln werden mindestens zwei aufeinander liegende Materialien quer, d.h. senkrecht, zur Materialbewegungsrichtung miteinander versiegelt.

Beispielsweise bei vertikalen Schlauchbeutelverpackungsmaschinen wird aus einer Materialbahn ein Schlauch geformt und die beiden Seitenkanten der Materialbahn mit einer Längssiegelnaht miteinander verbunden. Der Schlauch wird dann mit Hilfe von Quersiegelnähten in mehrere verschlossene Schlauchbeutel unterteilt.

Dabei ist es notwendig, dass der bereits mithilfe einer Längssiegelnaht verschlossene Schlauchbeutel durch die von der Sonotrode über den Schlauchbeutel auf das Gegenwerkzeug aufgebrachte Schweißkraft versiegelt wird. Durch das Vorhandensein der Längssiegelnaht ist die Anzahl der Materialbahnlagen, die zwischen Sonotrode einerseits und Amboss andererseits angeordnet sind, entlang der Breite der Schweißfläche nicht konstant.

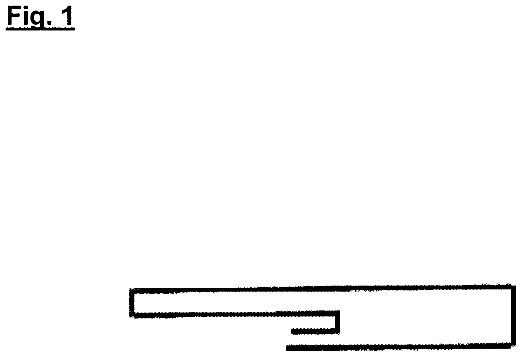

Wie in Figur 1 schematisch dargestellt, ergibt sich in der Regel ein 2-4-2 Lagen-Aufbau, d.h. während in den äußeren Bereichen des quer zu versiegelnden Schlauchbeutels lediglich zwei Materialbahnlagen aufeinanderliegen, liegen im Bereich der Längssiegelnaht vier Materialbahnlagen übereinander. D.h. dass an der Stelle, an der die Längsnaht umgeklappt wird, doppelt so viele Materialbahnlagen vorhanden sind, wie im restlichen Bereich der Schweißfläche. Da die Sonotrode mit einer konstanten Kraft auf den Amboss angepresst wird, führt dies auf der relativ kleinen Fläche der Längssiegelnaht zu einer hohen Flächenpressung. Es kommt daher in diesem 4-lagigen Bereich zu einem vorzeitigen Aufschmelzen, was wiederum zu einer ungewollten Überschweißung des Kunststoffes führt. Dadurch kann es zu Fehlstellungen, Undichtigkeit und zu einem undefinierten Schmelzfluss kommen, der im günstigsten Fall lediglich negative optische Auswirkungen auf die Quersiegelnaht hat. Darüber hinaus kann es zu Undichtigkeiten im 2-lagigen Bereich kommen, da ein Großteil der zur Verfügung stehenden Energie in den 4-lagigen Bereich eingebracht wird.

Der Vollständigkeit wird darauf hingewiesen, dass es auch andere Längssiegelnahtformen gibt. So ist es beispielsweise auch möglich, dass sich ein 2-3-2 Lagen-Aufbau ergibt. Bei solch einer Naht treten im Prinzip die beschriebenen Probleme ebenfalls auf.

Zum Herstellen einer Quersiegelnaht sind zur Zeit drei unterschiedliche Verfahren im Einsatz.

Zum einen besteht die Möglichkeit, die Längssiegelnaht einfach zu überschweißen. Dies hat den Vorteil, dass weder Amboss noch Sonotrode an die Längssiegelnaht angepasst werden müssen. Allerdings bestehen die bereits genannten Nachteile, so dass dieses Verfahren nur für spezielle Folientypen problemlos einsetzbar ist.

Als Alternative ist daher bereits ein Verfahren zum Einsatz gekommen, bei dem die Sonotrode oder der Amboss im Bereich der Längssiegelnaht, d.h. in dem Bereich, in der die Lagenzahl beispielsweise 4 beträgt, ausgespart ist. Während des Schweißvorgangs wird daher die auf dem Schlauchbeutel aufliegende Längsnaht im Bereich der Aussparung geführt. Dadurch kann die höhere Flächenpressung sowie die verhältnismäßig große Energiezufuhr im 4-lagigen Bereich eliminiert werden.

Ein solches Verfahren findet sich beispielsweise in der EP 1 468 914 A1, die eine Füllvorrichtung beschreibt, welche dazu geeignet ist die Position eines überlappenden Abschnitts zuverlässig zu korrigieren.

Dieses Verfahren hat jedoch den Nachteil, dass die Sonotrode oder der Amboss speziell angepasst sein müssen, d.h. sowohl die Materialbahndicke als auch die Breite der Längssiegelnaht müssen bekannt sein und die entsprechende Sonotrode bzw. der Amboss können dann nur für Materialien gleicher Dicke und gleicher Längssiegelnahtbreite verwendet werden. Wird beispielsweise die Breite der Längssiegelnaht verändert, so kann diese Schweißvorrichtung nicht mehr verwendet werden, stattdessen muss eine neue Sonotrode oder ein neuer Amboss mit der entsprechenden Aussparung hergestellt werden.

Da die Längssiegelnaht "liegend" durch die Aussparung geführt wird, muss die Aussparung eine Breite haben, die der Breite der Längssiegelnaht entspricht. Durch die Aussparung kommt es jedoch über die Breite der Längssiegelnaht zu einer schlechteren Querverschweißung, was wiederum bei einigen Materialien zu Undichtigkeiten führt.

Des weiteren kann im Betrieb nicht immer sichergestellt werden, dass die Längssiegelnaht exakt an der gleichen Position verläuft. Kommt es daher zu einem geringfügigen Verlauf, d.h. einem Versatz zwischen der Längssiegelnaht und der vorgesehenen Aussparung, hat dies negative Auswirkungen auf die Dichtigkeit der Naht.

Als drittes Verfahren wird eine mehrlagige Siegelnaht verwendet. D.h. hier wird zuerst eine Quernaht versiegelt, welche nicht oder nur ansatzweise über die Längssiegelnaht hinausgeht. Erst eine zweite Naht verläuft komplett über den Beutel und stellt damit die Abdichtung bereit. Gegebenenfalls kann zusätzlich noch eine dritte Siegelnaht, die nicht durchgehend ausgestaltet ist, hinzugefügt werden. Eine Siegelnaht ist in der Regel ausreichend, um eine entsprechende Dichtigkeit zu gewährleisten. Um sicherzustellen, dass sich der versiegelte Schlauchbeutel nicht selbsttätig oder beim Aufbringen einer geringen Öffnungskraft öffnet, sind jedoch häufig mehrere Quernähte erforderlich.

Dieses Verfahren hat den Vorteil, dass die wirkenden Kräfte besser verteilt werden. Allerdings ist auch hier das Verfahren aufwendig und das Format unflexibel, d.h. bei einer Änderung der Materialbahndicke und/oder der Breite der Längssiegelnaht müssen Komponenten ausgetauscht werden. Zudem besteht das eingangs genannte Problem beim Quersiegeln der zweiten Naht weiterhin.

In der DE 10 2007 060 442 A1 wird eine Ultraschallsonotrode mit einer Siegelfläche vorgeschlagen, bei der die Siegelfläche zweiteilig ausgebildet ist und die beiden Siegelflächen durch zwei zueinander zugewandte Siegelflächenabschnitte gebildet werden.

In der DE 10 2007 022854 A1 wird eine Schlauchbeutelmaschine zur Herstellung von schlauchartigen Beuteln beschrieben, die eine Folieneinheit zur Lagerung und Zuführung einer Folie, aus welcher die Schlauchbeutel hergestellt werden sollen, eine Siegeleinheit, um einen ersten und zweiten Folienrand der Folie miteinander zu einer Siegelnaht zu siegeln, und eine Nahtprüfeinrichtung umfasst, um die mittels der Siegeleinheit hergestellte Siegelnaht unmittelbar nach ihrer Herstellung zu prüfen.

Ausgehend von dem beschriebenen Stand der Technik liegt der vorliegenden Erfindung daher die Aufgabe zugrunde, ein Verfahren bzw. eine Quersiegelvorrichtung bereitzustellen, bei der die genannten Nachteile überwunden oder zumindest verringert werden können.

Hinsichtlich des Verfahrens wird diese Aufgabe dadurch gelöst, dass die Längssiegelnaht zumindest während des Aufbringens der Schweißkraft durch einen in der Sonotrode oder dem Gegenwerkzeug ausgebildeten Spalt bewegt wird, wobei die durch die Längssiegelnaht gebildete Fläche in etwa senkrecht zur Schlauchbeuteloberfläche steht. Dabei hat der Spalt in einer bevorzugten Ausführungsform eine Spaltbreite zwischen 0,05 und 0,3 mm, vorzugsweise zwischen 0,07 und 0,2 mm, am besten zwischen 0,9 und 0,15 mm.

Erfindungsgemäß wird somit die Längssiegelnaht nicht liegend zwischen Sonotrode und Gegenwerkzeug geführt, sondern "stehend" durch den Spalt bewegt, d.h. die Längssiegelnaht ist mit ihrer Nahtbreite senkrecht zum Schlauchbeutel angeordnet. Oder anders ausgedrückt steht die durch die Längssiegelnaht gebildete Fläche in etwa senkrecht zur Schlauchbeuteloberfläche. Daher ist vorgesehen, dass die Spalttiefe größer als die Spaltbreite ist.

Dadurch wird auf die Längssiegelnaht keine Schweißkraft aufgebracht. Da die Längssiegelnaht "stehend" und nicht liegend zwischen Sonotrode und Gegenwerkzeug hindurchbewegt wird, ist der Bereich, in dem keine Verschweißung zwischen Sonotrode und Gegenwerkzeug stattfindet, sehr gering, so dass mit keinen Undichtigkeitsproblemen zu rechnen ist. Der stattfindenden Schmelzfluss ist ausreichend, um durchgehend dichte Nähte zu erzeugen.

In einer weiteren besonders bevorzugten Ausführungsform ist vorgesehen, dass eine zweiteilige Sonotrode oder ein zweiteiliges Gegenwerkzeug verwendet wird, wobei der Abstand der beiden Teile der Sonotrode oder des Gegenwerkzeugs in Abhängigkeit von der Dicke der Längssiegelnaht eingestellt wird.

Hierdurch ist sichergestellt, dass Sonotrode oder Gegenwerkzeug an die Längssiegelnaht angepasst werden kann. Wird beispielsweise ein Schlauchbeutel aus einem sehr dünnen Material hergestellt, so kann der Abstand der beiden Teile, durch die der Spalt gebildet wird, verringert werden. Auch wäre es denkbar, den Spalt in dem Moment, in dem die Querversiegeln erfolgt kurzzeitig zu verkleinern um eine möglichst gute Verschweißung zu ermöglichen. Vor und nach dem Schweißvorgang kann dann der Spalt wieder etwas größer gewählt werden, um ein möglichst ungehindertes Hindurchgleiten der Längssiegelnaht durch den Spalt während des Bahnvorschubs zu gewährleisten.

Hinsichtlich der Vorrichtung wird die eingangs genannte Aufgabe durch eine Quersiegelvorrichtung mit einer Sonotrode und einem Gegenwerkzeug gelöst, bei der die Sonotrode oder das Gegenwerkzeug einen Spalt aufweist, wobei die Tiefe des Spaltes größer als die Breite des Spaltes ist und sich der Spalt in etwa senkrecht zur von der Sonotrode und Gegenwerkzeug bereitgestellten Siegelflächen erstreckt. Dieser Spalt ist dafür vorgesehen, die Längssiegelnaht "stehend", d.h. in etwa senkrecht zur versiegelnden Materialbahn aufzunehmen. Dabei soll die Längssiegelnaht nicht erneut versiegelt werden. Zugleich soll sichergestellt sein, dass die Quersiegelnaht mit möglichst geringer Unterbrechung aufgrund der Längssiegelnaht hergestellt werden kann. Daher erstreckt sich der Spalt in etwa senkrecht zur von der Sonotrode und Gegenwerkzeug bereitgestellten Siegelflächen.

In einer bevorzugten Ausführungsform hat die Sonotrode oder das Gegenwerkzeug eine Mehrzahl von Spalten unterschiedlicher Dicken. Dadurch kann das gleiche Werkzeug oder die gleiche Sonotrode für unterschiedliche Materialdicken verwendet werden. Soll ein Schlauchbeutel mit größerer Materialdicke versiegelt werden, so kann das Gegenwerkzeug und/oder die Sonotrode derart positioniert werden, dass ein anderer Spalt, der eine größere Spaltdicke aufweist, zur Aufnahme der Längssiegelnaht zur Verfügung steht. Da jedoch jeder Spalt in der Sonotrode oder dem Gegenwerkzeug zu einer Verringerung der Schweißkraft an der entsprechenden Position und dadurch die Gefahr einer Verschlechterung der Siegelnaht mit sich bringt, ist bei einer besonders bevorzugten Ausführungsform vorgesehen, dass die Spaltdicke einstellbar ist. Dabei kann beispielsweise Sonotrode oder Gegenwerkzeug zweiteilig ausgebildet sein, so dass sich zwischen den beiden Teilen der Spalt ausbildet, und eines der Teile kann relativ zu dem anderen beweglich sein, so dass die Spaltbreite eingestellt werden kann.

Weitere Vorteile, Merkmale und Anwendungsmöglichkeiten werden deutlich anhand der folgenden Beschreibung zweier Ausführungsformen und der dazugehörigen Figuren. Es zeigen:
- Figur 1: eine schematische Darstellung der Lagenzahl,
- Figur 2: eine perspektivische Ansicht einer ersten Ausführungsform der Erfindung,
- Figur 3: eine Draufsicht auf die Ausführungsform von Figur 2,
- Figur 4: eine Detailvergrößerung von Figur 3,
- Figur 5: eine perspektivische Ansicht einer zweiten Ausführungsform der Erfindung,
- Figur 6: eine Draufsicht auf die Ausführungsform von Figur 5 und
- Figur 7: eine Detailvergrößerung von Figur 6.

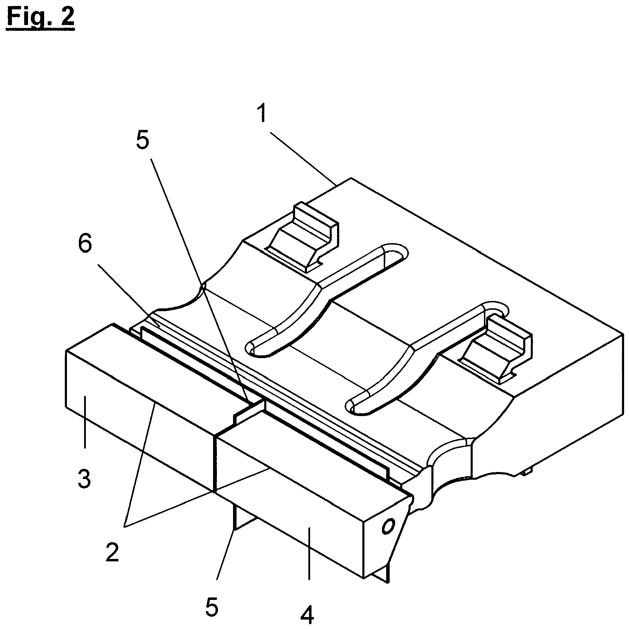

In Figur 2 ist eine erste Ausführungsform der Erfindung gezeigt. Die gezeigte Quersiegelvorrichtung besteht aus einer Sonotrode 1 und einem Amboss 2, welcher aus zwei Teilen 3, 4 besteht. Ein bereits mit einer Längssiegelnaht 5 versehene Schlauchbeutel 6 ist derart zwischen Sonotrode 1 und Amboss 2 angeordnet, dass der bereits versiegelte Abschnitt, d.h. die Längssiegelnaht 5, in den Spalt zwischen den beiden Teilen 3, 4 des Amboss 2 geführt wird, während der noch unversiegelte Teil des Schlauchbeutels 6 zwischen der Siegelfläche der Sonotrode 1 und dem Gegenwerkzeug 2 geführt wird.

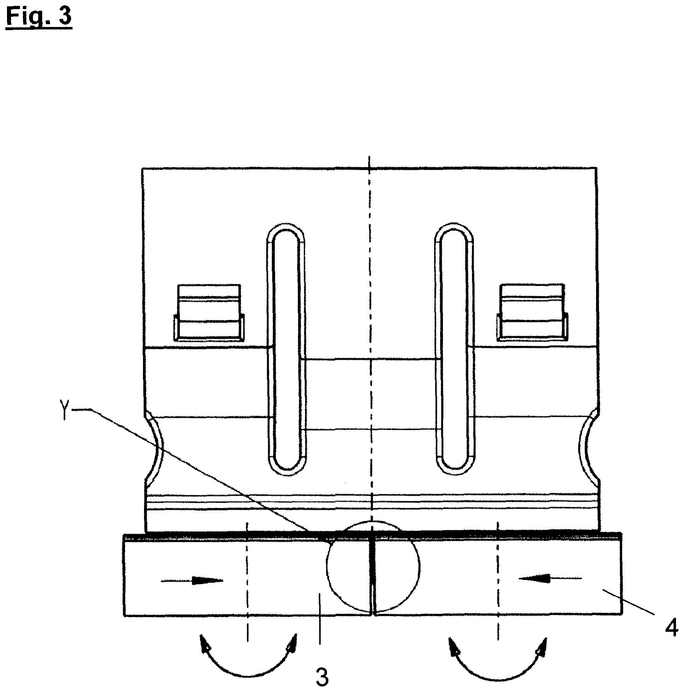

Wie in Figur 3, die eine Draufsicht auf die Ausführungsform von Figur 2 zeigt, mittels der Pfeile angedeutet ist, lassen sich die beiden Teile 3, 4 des Gegenwerkzeuges 2 relativ zueinander bewegen. Dies ermöglicht zum einen eine Anpassung des Spaltes 7 an die Dicke der Längssiegelnaht und ermöglicht zum anderen zu Beginn des Schweißvorgangs ein sicheres Einfädeln der Längssiegelnaht 5 in den Spalt 7. Die Spaltbreite des Spaltes 7 muss so gewählt werden, dass die Längssiegelnaht 5 ohne Behinderung durch den Spalt geführt werden kann und ohne dass es zu einer Beschädigung der Längssiegelnaht kommt. Andererseits ist der Spalt möglichst gering zu wählen, so dass der Bereich, in dem der Spalt 7 eine Querversiegelung zwischen dem Gegenwerkzeug 2 und Sonotrode 1 unterbricht, möglichst klein ausfällt.

In der Praxis hat sich gezeigt, dass dieser Abstand mit Vorteil zwischen 0,1 und 0,2 mm gewählt wird.

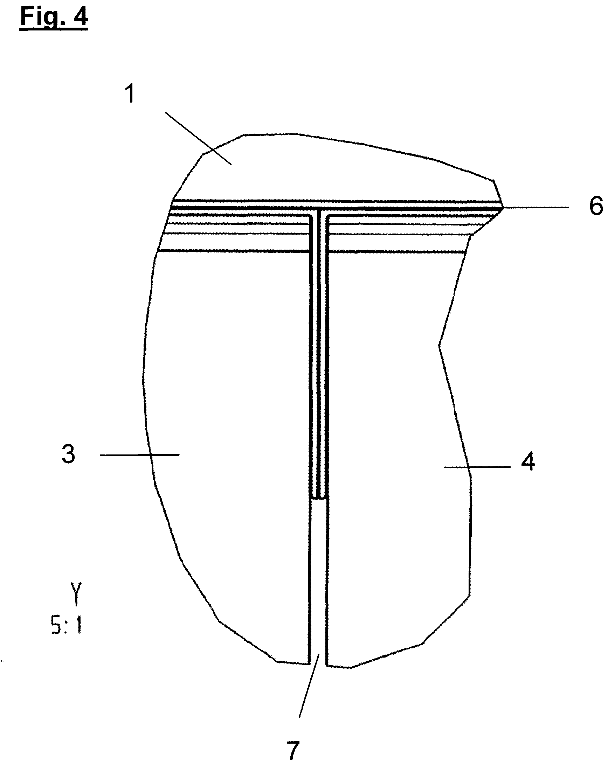

In Figur 4 ist eine Detailvergrößerung Y des entsprechenden Bereiches von Figur 3 gezeigt. Man erkennt den Verlauf des Schlauchbeutels 6 zwischen der Sonotrode 1 und den beiden Teilen 3, 4 des Gegenwerkzeuges 2. Weiterhin sieht man, dass die Längssiegelnaht 5 im Wesentlichen senkrecht, d.h. stehend, zu dem Spalt zwischen Gegenwerkzeug 2 und Sonotrode 1, in dem die Querversiegelung stattfindet, geführt wird.

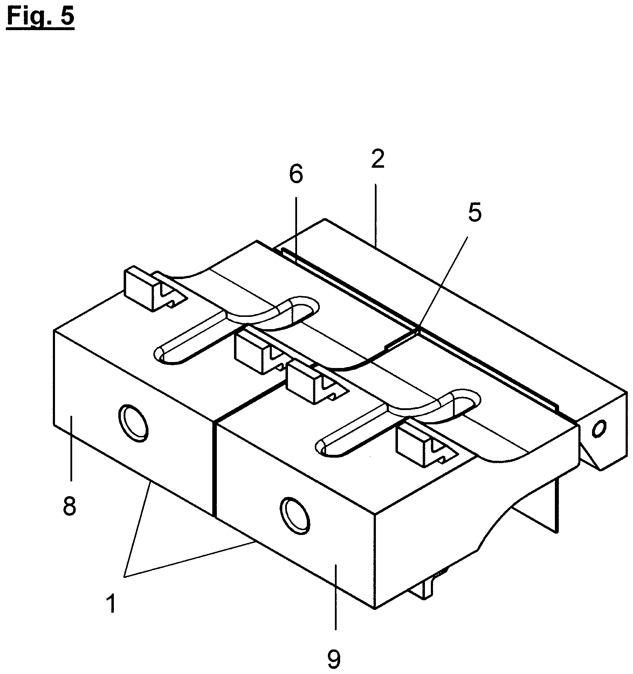

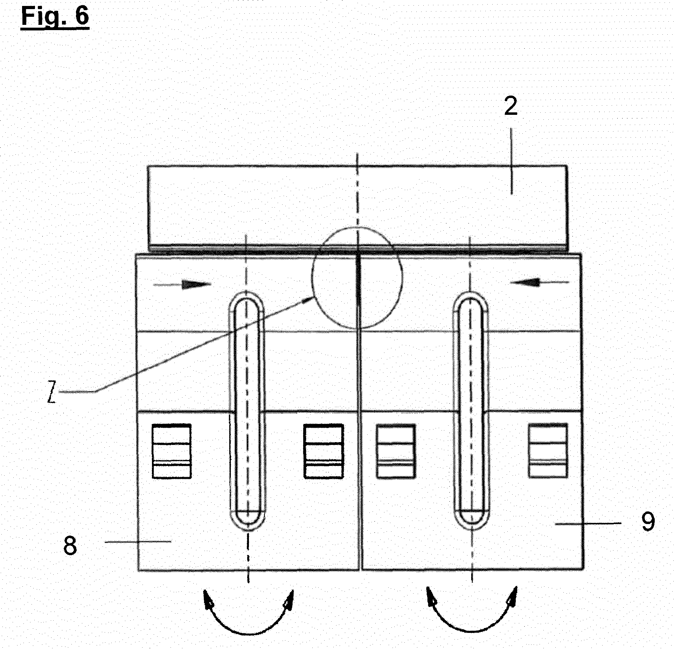

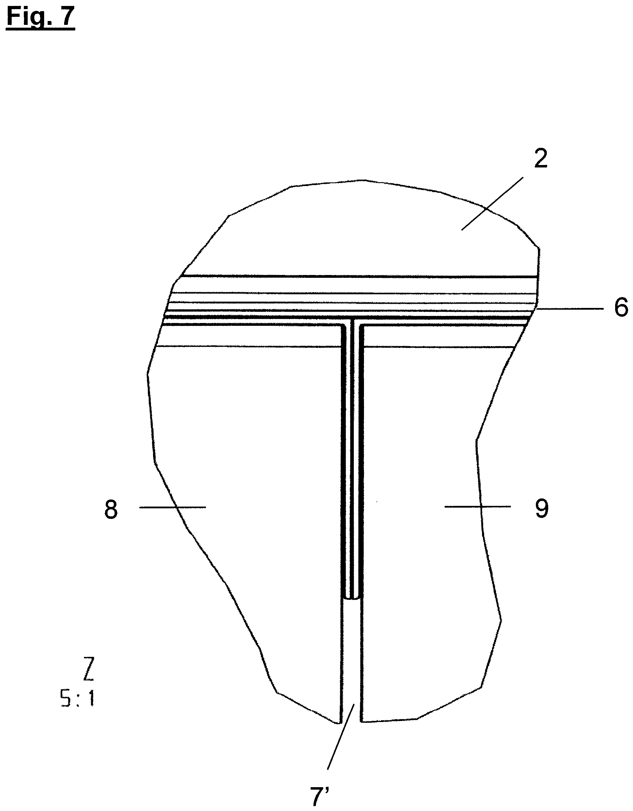

In den Figuren 5 bis 7 ist eine zweite Ausführungsform der Erfindung gezeigt. Figur 5 zeigt eine perspektivische Ansicht der zweiten Ausführungsform. Auch hier weist die Siegelvorrichtung eine Sonotrode 1 und ein Gegenwerkzeug 2 auf. Allerdings ist hier nicht das Gegenwerkzeug 2 zweiteilig ausgeführt, sondern die Sonotrode 1, die aus den beiden Teilen 8, 9 besteht. Die bereits verschweißte Längssiegelnaht wird in dieser Ausführungsform dann in den Spalt 7', der sich zwischen den beiden Teilen 8, 9 der Sonotrode 1 bildet, geführt. Ansonsten entspricht diese Ausführungsform der ersten Ausführungsform.

Erfindungsgemäß wird somit entweder die Sonotrode oder der Amboss mit einem Spalt versehen oder zweigeteilt, so dass sich ein Spalt zwischen beiden Teilen bildet. Durch den Spalt wird dann die Längssiegelnaht senkrecht zur Schweißfläche geführt. Dadurch wird verhindert, dass die Längssiegelnaht noch einmal mitversiegelt wird. Umfangreiche Tests haben gezeigt, dass bei einer Spaltbreite von etwa 0,1 bis 0,2 mm die Quersiegelnaht trotz des Spaltes dicht versiegelt werden kann.

Das beschriebene Verfahren und die Vorrichtung sind sehr flexibel einsetzbar. Zudem kann der Spalt, durch den die Längsnaht läuft, als zusätzliche Führung für den Beutelschlauch dienen. Es wird eine optisch sehr saubere Siegelstelle erzeugt. Die Längsnaht wird zudem nicht an die Quernaht gesiegelt, so dass sie unter Umständen für weitere Veränderungsschritte zur Verfügung steht.

### Bezugszeichenliste

- 1: Sonotrode
- 2: Amboss
- 3: Teil des Amboss
- 4: Teil des Amboss
- 5: Längssiegelnaht
- 6: Schlauchbeutel
- 7: Spalt
- 7': Spalt
- 8: Teil der Sonotrode
- 9: Teil der Sonotrode

## Patentansprüche

1. Verfahren zur Herstellung einer Quersiegelnaht in einem eine Längssiegelnaht (5) aufweisenden Schlauchbeutel, bei dem der Schlauchbeutel (6) zwischen einer Sonotrode (1) und einem Amboss (2) hindurchbewegt wird und zur Herstellung der Quersiegelnaht Sonotrode (1) und Amboss (2) aufeinander zu bewegt werden, so dass auf den Schlauchbeutel (6) eine Schweißkraft aufgebracht wird, **dadurch gekennzeichnet, dass** die Längssiegelnaht (5) zumindest während des Aufbringens der Schweißkraft durch einen in der Sonotrode (1) oder dem Gegenwerkzeug ausgebildeten Spalt (7) bewegt wird, wobei die durch die Längssiegelnaht (5) gebildete Fläche in etwa senkrecht zur Schlauchbeuteloberfläche steht.

2. Verfahren nach Anspruch 1, **dadurch gekennzeichnet, dass** der Spalt (7) eine Spaltbreite zwischen 0,05 und 0,3 mm, vorzugsweise zwischen 0,07 und 0,2 mm, am besten zwischen 0,9 und 0,15 mm hat.

3. Verfahren nach Anspruch 1 oder 2, **dadurch gekennzeichnet, dass** eine zweiteilige Sonotrode (1) oder ein zweiteiliges Gegenwerkzeug verwendet wird, wobei der Abstand der beiden Teile der Sonotrode (1) oder des Gegenwerkzeuges in Abhängigkeit von der Dicke der Längssiegelnaht (5) eingestellt wird.

4. Quersiegelvorrichtung zur Herstellung einer Quersiegelnaht in einem eine Längssiegelnaht aufweisenden Schlauchbeutel mit einer Sonotrode (1) und einem Gegenwerkzeug, die derart angeordnet sind, dass eine zu bearbeitenden Materialbahn zwischen Sonotrode (1) und Gegenwerkzeug hindurchbewegt werden kann, **dadurch gekennzeichnet, dass** Sonotrode (1) oder Gegenwerkzeug einen Spalt (7) zur Aufnahme der Längssiegelnaht aufweist, wobei die Tiefe des Spaltes (7) größer als die Breite des Spaltes (7) ist und sich der Spalt (7) in etwa senkrecht zur von der Sonotrode (1) und Gegenwerkzeug bereitgestellten Siegelflächen erstreckt.

5. Quersiegelvorrichtung nach Anspruch 4, **dadurch gekennzeichnet, dass** Sonotrode (1) oder Gegenwerkzeug eine Mehrzahl von Spalten unterschiedlicher Breiten aufweist.

6. Quersiegelvorrichtung nach Anspruch 4 oder 5, **dadurch gekennzeichnet, dass** die Spaltbreite einstellbar ist.

7. Quersiegelvorrichtung nach einem der Ansprüche 4 bis 6, **dadurch gekennzeichnet, dass** Sonotrode (1) oder Gegenwerkzeug zweiteilig ausgebildet sind, wobei zwischen den beiden Teilen der Spalt (7) ausgebildet wird.

8. Quersiegelvorrichtung nach Anspruch 7, **dadurch gekennzeichnet, dass** ein Teil relativ zu dem anderen Teil beweglich ist, so dass die Spaltbreite eingestellt werden kann.

9. Quersiegelvorrichtung nach einem der Ansprüche 4 bis 8 zur Durchführung des Verfahren nach einem der Ansprüche 1 bis 3.

## Claims

1. Method for producing a transverse sealing seam in a tubular bag exhibiting a longitudinal sealing seam (5) in which the tubular bag (6) is moved through between a sonotrode (1) and an anvil (2) and the sonotrode (1) and the anvil (2) are moved against one another to produce the transverse sealing seam so that a welding force is applied to the tubular bag (6), **characterised in that**
at least during the application of the welding force the longitudinal sealing seam (5) is moved through a gap (7) formed in the sonotrode (1) or the counter tool, wherein the surface formed by the longitudinal sealing seam (5) is approximately perpendicular to the surface of the tubular bag.

2. Method according to claim 1, **characterised in that** the gap (7) has a gap width of between 0.05 and 0.3 mm, preferably of between 0.07 and 0.2 mm, best of all of between 0.9 and 0.15 mm.

3. Method according to claim 1 or 2, **characterised in that** a two-part sonotrode (1) or a two-part counter tool is used, in which the distance between the two parts of the sonotrode (1) or the counter tool is adjusted according to the thickness of the longitudinal sealing seam (5).

4. Transverse sealing device for the production of a transverse sealing seam in a tubular bag exhibiting a longitudinal sealing seam with a sonotrode (1) and a counter tool which are arranged in such a way that a strip of material to be processed can be moved through between the sonotrode (1) and the counter tool, **characterised in that** the sonotrode (1) or the counter tool exhibits a gap (7) for receiving the longitudinal sealing seam, wherein the depth of the gap (7) is greater than the width of the gap (7) and the gap (7) extends approximately perpendicular to the sealing faces provided by the sonotrode (1) and the counter tool.

5. Transverse sealing device according to claim 4, **characterised in that** the sonotrode (1) or the counter tool exhibits a plurality of gaps of different widths.

6. Transverse sealing device according to claim 4 or 5, **characterised in that** the gap width is adjustable.

7. Transverse sealing device according to one of claims 4 to 6, **characterised in that** the sonotrode (1) or the counter tool are formed in two parts, the gap (7) being formed between the two parts.

8. Transverse sealing device according to claim 7, **characterised in that** one part is moveable relative to the other part so that the gap width can be adjusted.

9. Transverse sealing device according to one of claims 4 to 8 for implementing the method according to one of claims 1 to 3.

## Revendications

1. Procédé de production d'un joint soudé transversal dans un sachet tubulaire présentant un joint soudé longitudinal (5), consistant à faire passer le sachet tubulaire (6) entre une sonotrode (1) et une enclume (2) et à déplacer la sonotrode (1) et l'enclume (2) l'une vers l'autre pour produire le joint soudé transversal, de sorte qu'une force de soudage soit appliquée sur le sachet tubulaire (6), **caractérisé en ce que** le joint soudé longitudinal (5), au moins pendant l'application de la force de soudage, est déplacé à travers un interstice (7) réalisé dans la sonotrode (1) ou dans le contre-outil, la surface formée par le joint soudé longitudinal (5) étant approximativement perpendiculaire à la surface du sachet tubulaire.

2. Procédé selon la revendication 1, **caractérisé en ce que** l'interstice (7) a une largeur d'interstice comprise entre 0,05 et 0,3 mm, de préférence entre 0,07 et 0,2 mm, de la manière la plus préférée entre 0,9 et 0,15 mm.

3. Procédé selon la revendication 1 ou 2, **caractérisé en ce qu'**une sonotrode en deux parties (1) ou un contre-outil en deux parties est utilisé(e), l'espacement des deux parties de la sonotrode (1) ou du contre-outil étant ajusté en fonction de l'épaisseur du joint soudé longitudinal (5).

4. Dispositif de soudage transversal pour la production d'un joint soudé transversal dans un sachet tubulaire présentant un joint soudé longitudinal à l'aide d'une sonotrode (1) et d'un contre-outil, qui sont agencés de telle sorte qu'il soit possible de faire passer une bande de matériau à traiter entre la sonotrode (1) et le contre-outil, **caractérisé en ce que** la sonotrode (1) ou le contre-outil présente un interstice (7) pour recevoir le joint soudé longitudinal, la profondeur de l'interstice (7) étant supérieure à la largeur de l'interstice (7), et l'interstice (7) s'étendant approximativement perpendiculairement aux surfaces de soudage fournies par la sonotrode (1) et le contre-outil.

5. Dispositif de soudage transversal selon la revendication 4, **caractérisé en ce que** la sonotrode (1) ou le contre-outil présente une multiplicité d'interstices de largeurs différentes.

6. Dispositif de soudage transversal selon la revendication 4 ou 5, **caractérisé en ce que** la largeur d'interstice est ajustable.

7. Dispositif de soudage transversal selon l'une quelconque des revendications 4 à 6, **caractérisé en ce que** la sonotrode (1) ou le contre-outil sont fabriqué(e)s en deux parties, l'interstice (7) étant agencé entre les deux parties.

8. Dispositif de soudage transversal selon la revendication 7, **caractérisé en ce qu'**une partie peut être déplacée par rapport à l'autre partie, de sorte que la largeur d'interstice puisse être ajustée.

9. Dispositif de soudage transversal selon l'une quelconque des revendications 4 à 8 pour la mise en oeuvre du procédé selon l'une quelconque des revendications 1 à 3.
